# EUROPÄISCHE PATENTSCHRIFT

(11) **EP 3 293 000 B1**
(45) Veröffentlichungstag und Bekanntmachung des Hinweises auf die Patenterteilung: **15.08.2018**
(21) Anmeldenummer: 17187735.0
(22) Anmeldetag: 24.08.2017
(51) Int. Cl.: B32B 5/02, B29C 70/44, B32B 5/18, B32B 5/26, B32B 7/12, B32B 38/00, B32B 3/12

(54) **HERSTELLUNGSVERFAHREN FÜR EINEN SCHICHTVERBUND MIT INTUMESZENTEM MATERIAL UND TRIEBWERKSBAUTEIL**
METHOD OF MANUFACTURING A MULTILAYER COMPOSITE WITH INTUMESCENT MATERIAL AND ENGINE COMPONENT
PROCÉDÉ DE FABRICATION D'UN COMPOSITE STRATIFIÉ POURVU DE MATÉRIAU GONFLANT ET ÉLÉMENT DU MOTEUR

(30) Priorität: 09.09.2016 DE 102016217234
(43) Veröffentlichungstag der Anmeldung: 14.03.2018
(73) Patentinhaber: Rolls-Royce Deutschland Ltd & Co KG, 15827 Blankenfelde-Mahlow (DE)
(72) Erfinder: KUBISCH, Thomas, 15713 Königs-Wusterhausen (DE); KAAK, Oliver, 14052 Berlin (DE)
(74) Vertreter: Maikowski & Ninnemann Patentanwälte Partnerschaft mbB

(56) Entgegenhaltungen:
- US-A1- 2005 136 761
- US-A1- 2011 147 358

## Beschreibung

Die Erfindung betrifft ein Verfahren zur Herstellung eines Schichtverbunds für ein Triebwerksbauteil sowie ein Triebwerksbauteil.

Im Triebwerksbereich ist die Verwendung von Schichtverbunden für die Herstellung von Triebwerksbauteilen üblich. Hier werden faserverstärkte Verbundwerkstoffe in unterschiedlichen Konfigurationen und für verschiedene Triebwerksbauteile verwendet, um die gewünschten Materialeigenschaften durch die Kombination unterschiedlicher Werkstoffe zu erreichen. Ein Schichtverbund, aus dem ein Triebwerksbauteil hergestellt ist, besteht dabei aus mindestens zwei Schichten unterschiedlichen Materials, die stoff- und/oder formschlüssig miteinander verbunden sind. Bei Triebwerksbauteilen ist es ferner bekannt, diese mehrlagigen Schichtverbunde mit wenigstens einer feuerhemmenden oder feuerfesten Schicht zu versehen, um eine vorgegebene Feuerbeständigkeit oder Feuerfestigkeit zu erreichen. Mit dem entsprechenden Triebwerksbauteil kann dann beispielsweise ein abgeschotteter Bereich definiert werden, um eine Feuerausbreitung innerhalb des Triebwerks zu vermeiden oder zumindest in Grenzen zu halten.

Insbesondere aus dem Baubereich ist es beim Brandschutz ferner bekannt, intumeszente, porige Baustoffe zu verwenden, die unter Hitzeeinwirkung anschwellen oder aufschäumen und damit ihr Volumen im Brandfall erheblich vergrößern. Das intumeszente Material dient dabei beispielsweise dazu eine veraschende Isolationsschicht auszubilden, durch die die Sauerstoffzufuhr und damit eine Ausbreitung einer Flamme behindert ist. Durch das sich ausdehnende intumeszente Material kann ferner auch eine Versiegelung eines kritischen Bereichs erreicht werden, sodass sich in diesem eine Flamme nicht weiter ausbreiten kann. Schichtverbunde mit wenigstens einer Schicht mit einem intumeszenten, porigen Material sind dabei beispielsweise aus der AU 2006-235991 A1, der EP 0 949 313 B1, US 2005/136761 A1 oder der US 2011/147358 A1 bekannt.

Die Verwendung intumeszenter Materialien im Triebwerksbereich ist bisher nicht üblich. Dementsprechend gibt es derzeit allenfalls rudimentäre Überlegungen, einen Schichtverbund mit mindestens einer Schicht mit einem intumeszenten Material möglichst kompakt und leicht herzustellen, sodass eine Verwendung im Triebwerksbereich sinnvoll möglich ist.

Der Erfindung liegt daher die Aufgabe zugrunde, einen Schichtverbund für die Erstellung eines Triebwerksbauteils bereitzustellen, der hinsichtlich der Anforderungen im Triebwerksbereich verbessert ist.

Diese Aufgabe wird mit einem Herstellungsverfahren nach Anspruch 1 gelöst.

Bei einem erfindungsgemäßen Herstellungsverfahren ist vorgesehen, dass zur Herstellung eines mehrlagigen Schichtverbundes
- mindestens eine Materiallage aus einem intumeszenten, porigen Material zusammen mit mindestens einer weiteren Materiallage für mindestens eine weitere Schicht des Schichtverbundes in einem Werkzeug aufeinandergeschichtet werden und
- nach dem Aufeinanderschichten der Materiallagen zumindest das intumeszente, porige Material durch ein aushärtendes Harz imprägniert wird.

Erfindungsgemäß ist weiterhin vorgesehen, dass
- vor der Imprägnierung auf die aufeinandergeschichteten Materiallagen ein Druck aufgebracht wird, um wenigstens die Materiallage des intumeszenten, porigen Materials zu komprimieren, und
- durch das aushärtende Harz die Materiallage des intumeszenten, porigen Materials in dem Schichtverbund in seiner komprimierten Form gehalten und gegen ein Eindringen einer Flüssigkeit abgedichtet wird.

Die Erfindung geht damit von dem Grundgedanken aus, sich die porige, gegebenenfalls auch poröse Eigenschaft eines intumeszenten Materials zu eigen zu machen, um dieses in einer komprimierten Form mit einem Harz respektive einer Harzmasse zu imprägnieren und damit einen herzustellenden Schichtverbund mit einem intumeszenten Material mit einer reduzierten Wanddicke auszubilden. Das zugeführte Harz dient dabei einerseits dazu, die Steifigkeit und Widerstandsfähigkeit der Schicht mit dem intumeszenten, porigen Material in dem Schichtverbund zu erhöhen sowie die Schicht mit dem intumeszenten Material stoffschlüssig mit der mindestens einen weiteren Schicht zu verbinden. Andererseits ist bei der erfindungsgemäßen Lösung über das ausgehärtete Harz die Materiallage des intumeszenten Materials in seiner komprimierten Form innerhalb des Schichtverbundes konserviert und abgedichtet.

Durch die Verwendung eines intumeszenten, porigen Materials ist sichergestellt, dass das eingebrachte Harz respektive die eingebrachte Harzmasse von dem porigen respektive porösen intumeszenten Material aufgesaugt werden kann und damit das intumeszente Material von dem Harz durchtränkt und - nach dessen Aushärten - abgedichtet werden kann. An dem Triebwerksbauteil kann dann mittels des intumeszenten, durch das Harz abgedichteten Materials eine versiegelte Schicht gebildet werden, welche gegen Fluideinwirkungen resistent ist. Das intumeszente Material weist beispielsweise eine Porosität von über 70%, insbesondere im Bereich von mehr als 85% oder etwa 90% auf. Das intumeszente Material liegt dabei beispielsweise im Rohzustand filzartig als Materiallage aus einem Faservliesstoff vor. Beispielsweise wird eine Materiallage aus Tecnofire® der Technical Fibre Products Ltd. verwendet.

Bei einem erfindungsgemäß hergestellten Schichtverbund gast im Brandfall oder bei einer über einen kritischen Schwellwert ansteigenden Temperatur das Harz aus dem intumeszenten Material aus respektive vaporisiert und gibt das intumeszente Material somit frei, sodass es anschwellen oder aufschäumen kann, um brandhindernd oder feuerhemmend zu wirken. Dabei wird bereits durch das ausgasende Harz eine erste Volumenvergrößerung der Schicht mit dem intumeszenten Material gestattet, da das Harz diese Schicht nicht mehr in ihrer komprimierten Form hält. Zeitgleich oder nachfolgend zur Ausgasung des Harzes respektive zur Vaporisierung oder Verbrennung des Harzes erfolgt eine temperaturgetriebene Volumenvergrößerung des intumeszenten Materials. Derart kann beispielsweise durch das ausgasende Harz ein kontrolliertes Abflammen erreicht werden, bei dem in Harz getränktes Material des Schichtverbundes ähnlich einer Kerze abbrennt, bevor anschließend durch das (weitere) Aufquellen oder Aufschäumen des intumeszenten Materials eine Barriere erzeugt wird, die einer weiteren Flammenausbreitung entgegenwirkt. Die Schicht mit dem intumeszenten Material wirkt dabei im Brandfall oder bereits bei einer über einen kritischen Schwellwert ansteigenden Temperatur als eine Art Hitzeschild.

Durch die erfindungsgemäß vorgesehene Komprimierung wenigstens der Materiallage des intumeszenten, porigen Materials wird ferner erreicht, dass für dessen Abdichtung eine geringere Menge an Harz benötigt wird. Hiermit ist dann regelmäßig auch verbunden, dass eine äußere Schicht des Schichtverbundes weniger harzreich ist, da die Materiallage aus dem intumeszenten Material in dem fertiggestellten Schichtverbund üblicherweise eine Außenschicht auf der vor Feuer zu schützenden Seite bildet. Dies kann mit Blick auf eine geforderte Festigkeit und Steifigkeit des aus dem Schichtverbund hergestellten Triebwerksbauteils von Vorteil sein, insbesondere da hierdurch nur eine vergleichsweise dünne Schicht mit intumeszenten Material Verwendung finden muss und der zur Verfügung stehende Bauraum für die weitere, dann strukturtragende Schicht genutzt werden kann.

Die mindestens eine weitere Schicht respektive Materiallage zur Bildung des Schichtverbunds ist in einer Ausführungsvariante durch einen Verbundwerkstoff gebildet. Beispielsweise ist hierbei eine Materiallage für die weitere Schicht in Form eines Prepregs, also einem vorimprägnierten textilen Faser-Matrix-Halbzeug vorgesehen. Alternativ oder ergänzend kann eine Schicht aus einem anderen faserverstärkten Material vorgesehen sein.

In einer Ausführungsvariante eines erfindungsgemäßen Verfahrens ist für die Imprägnierung mit dem Harz eine Erwärmung der aufeinandergeschichteten Materiallagen bis wenigstens zu einer Mindesttemperatur vorgesehen. Die Erwärmung erfolgt hierbei zum Beispiel durch Erwärmung eines die aufeinandergeschichteten Materiallagen aufnehmenden Aufnahmeraumes des Werkzeugs. Dieser Aufnahmeraum ist beispielsweise durch eine Kavität in einer Formschale oder durch einen Autoklav definiert. Die Erwärmung dient beispielsweise zum Flüssighalten des eingebrachten Harzes oder zum Aushärten des Harzes bei einem warmhärtenden Harz.

Es sei an dieser Stelle bereits angemerkt, dass die Einbringung des Harzes beispielsweise durch eine separate Harzlage erfolgen kann, die in den aufeinandergeschichteten Materiallagen vorgesehen ist. Alternativ kann eine Injektion des Harzes, beispielsweise im Wege eines Harzinjektionsverfahrens (englisch "(Resin Transfer Moulding", kurz "RTM") oder Vakuum unterstützt im Wege eines VARI- oder VARTM-Verfahrens erfolgen (kurz für Englisch "Vaccum Assisted Resin Injection" oder "Vacuum Assisted Resin Transfer Moulding"). Alternativ oder ergänzend kann bei einer Verwendung eines vorimprägnierten Prepregs das hierin enthaltene Harz im Zuge der Herstellung des Schichtverbundes durch Druckbeaufschlagung und Erwärmung verflüssigt und dann (auch) zur Durchtränkung des komprimierten intumeszenten Materials genutzt werden, das hierauf aufgeschichtet ist.

In einer Ausführungsvariante wird für die Imprägnierung eine Erwärmung der aufeinander geschichteten Materiallagen auf eine Mindesttemperatur von etwa 70 °C vorgesehen, um zu erreichen, dass das Harz respektive die Harzmasse das komprimierte intumeszente Material ausreichend durchtränkt. Der weiter Herstellungsprozess kann vorsehen, dass zur die Temperatur nachfolgend stufenweise bis zu einer ersten Maximaltemperatur von etwa 120°C und anschließend bis zu einer zweiten Maximaltemperatur von etwa 175°C erhöht wird. Eine definierte Verweilzeit bei einer ersten Maximaltemperatur, z.B. in Höhe von 120°C, dient zum Spannungsausgleich beim Härten, da sichergestellt werden soll, das Werkzeuge und Schichtverbund eine ausgeglichene Temperatur aufweisen, bevor die eigentliche Härtung durch die Erhöhung auf die zweite Maximaltemperatur erfolgt.

Um sicherzustellen, dass das intumeszente Material bereits auf eine gewünschte Dicke verdichtet ist, bevor das Harz in das intumeszente Material eindringt, ist in einer Variante vorgesehen, dass der Druck zum Komprimieren wenigstens der Materiallage des intumeszenten, porigen Materials aufgebracht wird, bevor die Mindesttemperatur, von zum Beispiel 70 °C, erreicht ist. Hierfür kann der Druck aufgebracht werden, wenn eine Heizeinrichtung zum Erwärmen der aufeinandergeschichteten Materiallagen auf die Mindesttemperatur aktiviert wird oder bevor eine solche Heizeinrichtung aktiviert wird. Der vorgesehene (Kompression-) Druck wird so zu demjenigen Zeitpunkt aufgebracht, an dem oder kurz nachdem die Heizeinrichtung aktiviert wird und damit ein Erwärmungsvorgang ausgelöst wird. Hierüber - wie auch bei einer nachgeschalteten Aktivierung der Heizeinrichtung - ist sichergestellt, dass der vorgegebene Druck in jedem Fall bereits auf die Materiallagen einwirkt, bevor die Mindesttemperatur erreicht ist.

In einer Ausführungsvariante liegt der vorgesehene (Kompression-) Druck zum Komprimieren wenigstens der Materiallage des intumeszenten Materials im Bereich von 5 bis 8 bar, insbesondere im Bereich von 5,5 bis 7,5 bar. Zum Beispiel ist ein Druck von etwa 7 bar vorgesehen.

Wie bereits vorstehend angesprochen, kann in einer Ausführungsvariante das zu Imprägnierung vorgesehene Harz als separate Materiallage in den aufgeschichteten Materiallagen vorgesehen sein. Das Harz wird hierbei beispielsweise als vergleichsweise dünne Schicht zwischen einer Materiallage des intumeszenten Materials und einer weiteren Materiallage aus einem Verbundwerkstoff vorgesehen. Bei anschließender Erwärmung und Kompression dringt dann das Harz in das intumeszente Material und den Verbundwerkstoff ein und verbindet diese. Ein solches Verfahren kann beispielsweise in einem Autoklav umgesetzt werden.

Alternativ oder ergänzend kann die mindestens eine Materiallage für die mindestens eine weitere Schicht des Schichtverbundes vorimprägniert sein und damit das zu Imprägnierung des intumeszenten, porigen Materials vorgesehene Harz zumindest teilweise aus der vorimprägnierten Materiallage stammen. Insbesondere in diesem Zusammenhang kann sich gegebenenfalls die vorstehend erläuterte Variante, bei der der (Kompression-) Druck zum Komprimieren wenigstens der Materiallage des intumeszenten Materials frühzeitig aufgebracht wird, bevor eine Erwärmung der auf einander geschichteten Materiallagen erfolgt, als besonders vorteilhaft erweisen. Durch den frühzeitig aufgebrachten Druck kann ein Harz für die Konservierung der komprimierten Form des intumeszenten Materials und dessen Abdichtung in vergleichsweise geringer Menge vorgesehen werden und bereits frühzeitig in das intumeszente Material eindringen, bevor durch eine nachfolgende Erwärmung eine Verflüssigung des (zusätzlichen) Harzes aus der vorimprägnierten Materiallage auftritt. Damit kann eine gegebenenfalls unerwünschte Vermischung unterschiedlicher Harze und mithin Harzsysteme innerhalb des Schichtverbundes effektiv vermieden werden.

Für eine stoffschlüssige Verbindung der aufeinandergeschichteten Materiallagen kann in einer Ausführungsvariante mindestens eine Klebemittellage vorgesehen sein. Diese Klebemittellage kann ein - gegebenenfalls zusätzliches - Harz enthalten, das zur Imprägnierung des intumeszenten Materials zumindest teilweise genutzt wird.

In einem Ausführungsbeispiel ist als Werkzeug ein Autoklav genutzt, mittels dem der Druck zum Komprimieren wenigstens der Materiallage des intumeszenten, porigen Materials auf die aufeinandergeschichteten Materiallagen aufgebracht wird. Ein hier vorgesehener Herstellungsprozess kann dann beispielsweise insbesondere einen Autoklavenzyklus vorgesehen, bei dem bereits frühzeitig der zur Komprimierung des intumeszenten Materials vorgesehene Druck aufgebracht wird, bevor eine Erwärmung der aufeinandergeschichteten Materiallagen erfolgt.

Das verwendete intumeszente, porige Material ist beispielsweise derart gewählt und der hierauf aufgebrachte Druck derart hoch eingestellt, dass die Schicht mit dem intumeszenten, porigen Material in dem hergestellten Schichtverbund eine Dicke von 2,3 mm nicht übersteigt. Insbesondere liegt eine (Schicht-) Dicke beispielsweise im Bereich von 0,4 mm bis 1,5 mm. Die Schicht komprimierten, intumeszenten Materials ist somit vergleichsweise dünn und in seinem komprimierten Zustand durch die Bindung mittels des Harzes arretiert, quasi "eingefroren". Durch die intumeszente Eigenschaft des Materials kann diese Schicht jedoch auf ein Vielfaches ihres Volumens anschwellen, um hierdurch eine feuerhemmende Barriere auszubilden.

Ein weiterer Aspekt der erfindungsgemäßen Lösung ist die Bereitstellung eines Schichtverbunds, aus dem ein Triebwerksbauteil zumindest teilweise herstellbar ist.

Ein solcher Schichtverbund ist hierbei mehrlagig aufgebaut und weist mindestens eine Schicht mit einem intumeszenten, porigen Material sowie mindestens eine weitere Schicht, zum Beispiel aus einem Verbundwerkstoff, auf. Zur Bildung der Schicht mit dem intumeszenten, porigen Material ist eine Materiallage aus intumeszenten, porigen Material durch ein Harz imprägniert, das in seinem ausgehärteten Zustand die Materiallage aus intumeszenten, porigen Material in dem Schichtverbund in einer komprimierten Form hält und gegen Eindringen einer Flüssigkeit, aber auch gegen ein Eindringen von Feuchtigkeit und Gasen abdichtet.

Ein solcher Schichtverbund kann somit durch ein erfindungsgemäßes Herstellungsverfahren hergestellt werden. Dementsprechend gelten vorstehend und nachstehend genannte Vorteile und Merkmale von Ausführungsvarianten eines erfindungsgemäßen Herstellungsverfahrens auch für Varianten eines solchen Schichtverbundes und umgekehrt.

Erfindungsgemäß ist mit einem solchen Schichtverbund beispielsweise ein Triebwerksbauteil für ein Gasturbinentriebwerk hergestellt. Ein solches Triebwerksbauteil kann beispielsweise ein Triebwerksgehäuse (auch als Gondel oder englisch "nacelle" bezeichnend), ein Fangehäuse, eine Wandung eines Bypasskanals oder ein Verkleidungsbauteil für die Einhausung mindestens einer Leitung und/oder einer elektronischen und/oder Fluid führenden Komponente und/oder Baugruppe innerhalb des Triebwerks sein.

Mögliche Ausführungsvarianten der erfindungsgemäßen Lösung sind anhand der beigefügten Figuren exemplarisch veranschaulicht.

Hierbei zeigen:
- Figur 1: schematisch und in Querschnittsansicht ein Gasturbinentriebwerk in Form eines Turbofan-Triebwerks, an dessen Triebwerksbauteilen ein erfindungsgemäß hergestellter Schichtverbund Verwendung findet;
- Figur 2: eine detailliertere Darstellung des Triebwerks der Figur 1 in perspektivischer Ansicht ohne Darstellung eines Triebwerksgehäuses;
- Figuren 3A-3C: schematisch unterschiedliche Ausführungsvarianten eines erfindungsgemäßen Herstellungsverfahrens unter Veranschaulichung unterschiedlicher Materiallagen zur Herstellung eines mehrlagigen Schichtverbunds;
- Figur 4: ein Diagramm, in dem ein Temperaturverlauf und ein Druckverlauf für eine mit einem Autoklav ausgeführte Variante eines erfindungsgemäßen Herstellungsverfahrens über der Zeit aufgetragen sind;
- Figur 5: schematisch eine weitere Ausführungsvariante eines erfindungsgemäßen Herstellungsverfahrens, bei dem eine separate Harzlage zwischen einer Materiallage aus intumeszenten Material und einer Materiallage aus einem Verbundwerkstoff zur Erzeugung eines Schichtverbunds verwendet werden.

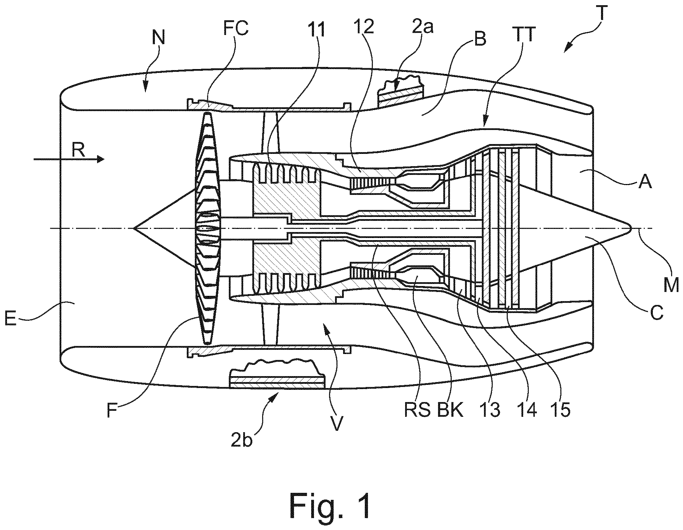

Die Figur 1 veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind. An einem Einlass oder Intake E des Triebwerks T wird Luft entlang einer Eintrittsrichtung R mittels eines Fans F angesaugt. Dieser in einem Fangehäuse FC angeordnete Fan F wird über eine Rotorwelle RS angetrieben, die von einer Turbine TT des Triebwerks T in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits dem Verdichter V Luft zu sowie andererseits einem Sekundärstromkanal oder Bypasskanal B zur Erzeugung des Schubs. Der Bypasskanal B verläuft hierbei um ein den Verdichter V und die Turbine TT umfassendes Kerntriebwerk, das einen Primärstromkanal für die durch den Fan F dem Kerntriebwerk zugeführte Luft umfasst. Nach außen wird der Bypasskanal B von einem Triebwerksgehäuse N begrenzt, das üblicherweise als Gondel (englisch: "nacelle") bezeichnet wird.

Die über den Verdichter V in den Primärstromkanal geförderte Luft gelangt in einen Brennkammerabschnitt BK des Kerntriebwerks, in dem die Antriebsenergie zum Antreiben der Turbine TT erzeugt wird. Die Turbine TT weist hierfür eine Hochdruckturbine 13, eine Mitteldruckturbine 14 und einen Niederdruckturbine 15 auf. Die Turbine TT treibt dabei über die bei der Verbrennung frei werdende Energie die Rotorwelle RS und damit den Fan F an, um über die die in den Bypasskanal B geförderte Luft den erforderlichen Schub zu erzeugen. Sowohl die Luft aus dem Bypasskanal B als auch die Abgase aus dem Primärstromkanal des Kerntriebwerks strömen über einen Auslass A am Ende des Triebwerks T aus. Der Auslass A weist hierbei üblicherweise eine Schubdüse mit einem zentral angeordneten Austrittskonus C auf.

Anhand der Figur 1 ist im Bereich des Triebwerksgehäuses N exemplarisch veranschaulicht, eine den Bypasskanal B berandende Wandung und/oder eine äußere Mantelfläche des Triebwerksgehäuse N über einen mehrlagig aufgebauten Schichtverbund 2a oder 2b aufzubauen. Eine den Bypasskanal B berandende Wandung kann hierbei zur Vermeidung einer Flammenausbreitung bei einem in dem Triebwerk T entstehenden Feuer mit einer feuerhemmenden oder feuerfesten Schicht versehen sein. Gleiches gilt für eine Ummantelung des radial weiter innen liegenden Kerntriebwerks. Auch hier werden insbesondere Teile des Gehäuses aus einem Schichtverbund und damit aus einem Verbundwerkstoff hergestellt, wobei ein solcher Schichtverbund üblicherweise wenigstens eine Schicht aus einem feuerfesten oder zumindest feuerhemmenden Material aufweist.

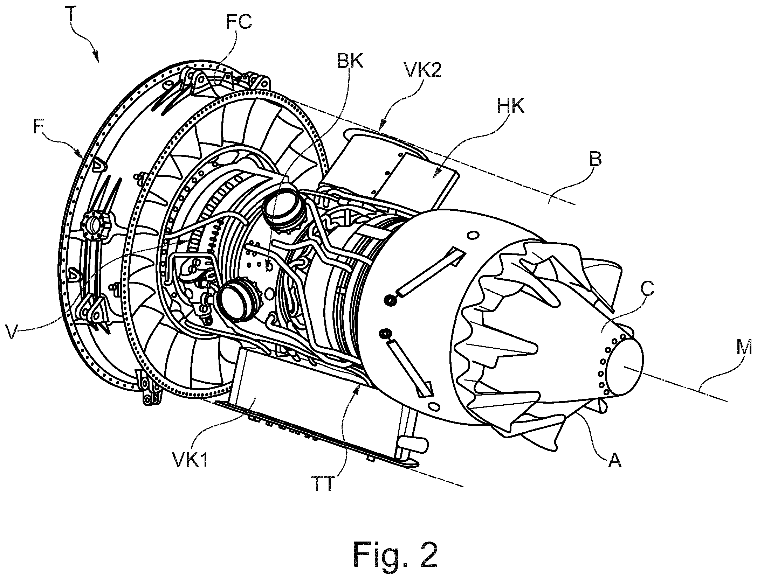

Anhand der Figur 2, in der das Triebwerk T der Figur 1 in perspektivischer Darstellung mit größerem Detaillierungsgrad und ohne dass Triebwerksgehäuse N dargestellt ist, werden exemplarisch weitere Triebwerksbauteile veranschaulicht, die aus einem Schichtverbund mit zumindest einer feuerfesten oder feuerhemmenden Schicht hergestellt sein können.

Hierbei sei zum Beispiel verwiesen auf das Fangehäuse FC des Fans F sowie innerhalb des Bypasskanals B liegende Verkleidungen VK1 und VK2. Über die Verkleidungen VK1 und VK2 sind beispielsweise Leitungen und/oder elektronische Komponenten aerodynamisch eingehaust. Beispielsweise bildet ein Verkleidungsbauteil VK2 hierfür eine Hinterkante HK aus, die in Strömungsrichtung des in dem Bypasskanals B im Betrieb des Triebwerks strömenden Fluids spitz zuläuft. Die Verkleidungsbauteile VK1 und VK2 werden üblicherweise auch im englischen als "fairings" oder "splitter fairing" bezeichnet.

Alternativ oder ergänzend zu den vorstehend genannten Triebwerksbauteilen können auch Verkleidungen oder Gehäuse, die innerhalb eines Hohlraums in dem Triebwerksgehäuse N untergebracht sind, aus einem Schichtverbund hergestellt sein, der aus Brandschutzgründen mit einem feuerfesten oder feuerhemmenden Material versehen ist.

Grundsätzlich besteht bei allen Schichtverbunden im Triebwerksbereich das Bestreben, diese dünnwandig und vor allem leicht auszugestalten, ohne hierbei selbstverständlich auf einen effektiven Brandschutz verzichten zu müssen. In diesem Zusammenhang schlägt die erfindungsgemäße Lösung vor, einen Schichtverbund, wie zum Beispiel den Schichtverbund 2a oder 2b, mit einem intumeszenten, porigen Material und zusätzlich nach einem Verfahren herzustellen, bei dem eine Materiallage des intumeszenten, porigen Materials in komprimierter Form mit einem Harz imprägniert und in seiner komprimierten Form gehalten und abgedichtet wird.

Über die Verwendung eines intumeszenten Materials wird somit in einen Schichtverbund, der vorzugsweise mehrere Verbundwerkstoffe integriert, mindestens eine Schicht vorgesehen, die bei über einen Schwellwert ansteigenden Temperatur (z.B. von 195°C) und insbesondere bei einem Feuer innerhalb des Triebwerks T um ein Vielfaches ihres ursprünglichen Volumens ansteigt und hierdurch eine isolierende Schicht nach Art eines Hitzeschild bereitstellt und/oder durch ihre Volumenvergrößerung Bereiche gezielt verschließt, sodass sich eine Flamme nicht ohne weiteres in diese Bereiche hinein ausbreiten kann.

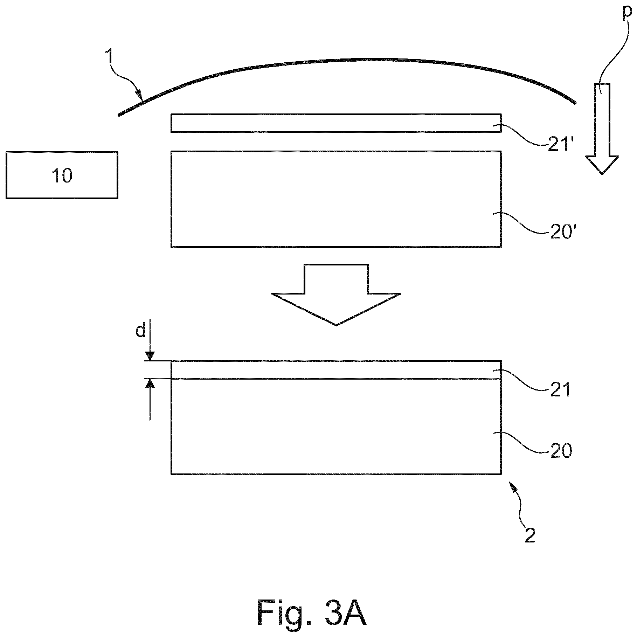

In einer anhand der Figur 3A veranschaulichten Herstellungsvariante ist dabei vorgesehen, dass eine Materiallage 21' aus intumeszenten Material in einem Werkzeug 1 auf eine Verbundwerkstofflage 20', zum Beispiel mit Faserverstärkung, gelegt wird. Anschließend wird mittels des Werkzeugs 1 ein erhöhter Druck p zur Komprimierung der aufeinandergeschichteten Materiallagen 20' und 21' aufgebracht. Hierbei wird insbesondere die Materiallage aus intumeszenten Material 21' komprimiert.

Anschließend wird über ein Harz aus einer Harzzufuhr 10 des Werkzeugs 1 zur Imprägnierung der komprimierten Materiallagen 20' und 21' eingebracht. Insbesondere das vorzugsweise hochporige intumeszente Material der Materiallage 21' wird jeweils mit dem Harz gefüllt, sodass nicht nur die beiden Materiallagen 20' und 21' über das Harz stoffschlüssigen miteinander verbunden sind, sondern auch die Materiallage 21' des intumeszenten Materials in ihrer komprimierten Form gehalten und abgedichtet ist. Das ausgehärtete Harz konserviert somit die komprimierte Form des intumeszenten Materials und dichtet dieses gegen das Eindringen von Flüssigkeiten nach außen ab. Das Einbringen des Harzes über die Harzzufuhr 10 erfolgt beispielsweise nach Art eines Harzinjektionsverfahrens (RTM-Verfahrens) oder Vakuum unterstützt in einem VARI- oder VARTM-Verfahren.

Für die Bereitstellung einer Materiallage 21' aus einem intumeszenten, hochporigen Material bietet sich Beispiel Tecnofire® der Technical Fibre Products Ltd. an. Jedoch sind auch grundsätzlich andere intumeszente Materialien geeignet, insbesondere solche die filzartig und in Form eines flexiblen Faservliesstoffes vorliegen.

Bei einem entsprechend der Variante der Figur 3A durchgeführten Herstellungsverfahren liegt am Ende ein Schichtverbund 2 vor, in dem mehrere Schichten 20 und 21 untereinander verbunden vorliegen. Hierbei ist eine Verbundwerkstoffschicht 20, die üblicherweise auch als Verbundlaminat (englisch "composite laminate") bezeichnet wird, für die Bereitstellung der gewünschten strukturellen Eigenschaften wie Steifigkeit und Festigkeit vorgesehen. Die mindestens eine zusätzliche Schicht 21 mit dem komprimierten intumeszenten Material dient dem Brandschutz. Diese Schicht 21 ist vergleichsweise dünnwandig und weist lediglich eine (Schicht-) Dicke von unter 2 mm, zum Beispiel eine Dicke im Bereich von 0,4 mm bis 1,5 mm, auf.

Bei einer über einen Schwellwert, zum Beispiel in Höhe von etwa 195°C, ansteigenden Temperatur im Bereich der mit dem intumeszenten Material versehenen Schicht 21 oder einer Flammenbildung in diesem Bereich gast das ausgehärtete Harz des Schichtverbunds 2 aus. Das intumeszente Material der Schicht 21 wird dann über das Harz nicht mehr in seiner komprimierten Form gehalten und kann temperaturbedingt (zusätzlich) anschwellen oder aufschäumen. Die hiermit verbundene Volumenvergrößerung der mit dem intumeszenten Material versehenen Schicht 21 kann nach Art eines Hitzeschilds als feuerhemmende oder feuerfeste Barriere dienen. Alternativ oder ergänzend kann über die Volumenvergrößerung ein Bereich des Triebwerks T abgeschottet werden, in Abhängigkeit davon, welches Triebwerksbauteil aus dem Schichtverbund 2 hergestellt wird.

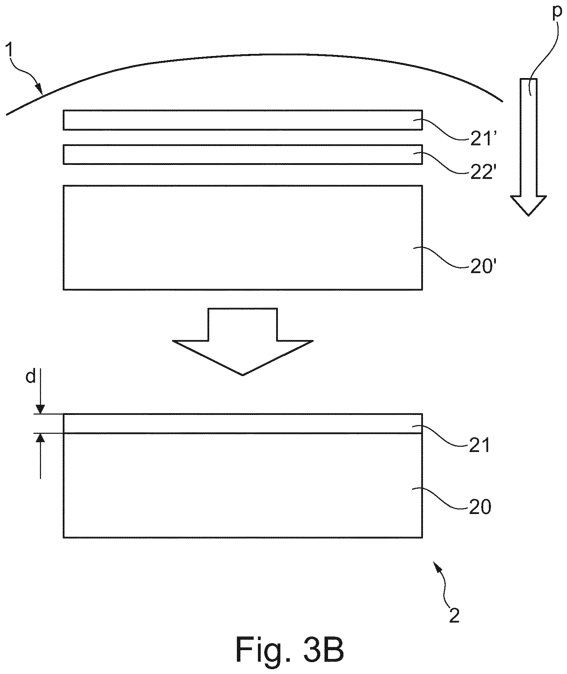

Bei der Variante der Figur 3B wird zur Imprägnierung und Abdichtung der komprimierten Materiallage 21' aus intumeszenten, porigen Material eine separate Klebemittellage 22' verwendet. Diese Klebemittellage 22' wird bei der Herstellung des Schichtverbunds 2 zwischen der Materiallage 21' des intumeszenten Materials und der Verbundwerkstofflage 20' vorgesehen. Durch den mittels des Werkzeugs 1 aufgebrachten Druck p und entsprechende Erwärmung dringt das Harz der Klebemittellage 22' in die komprimierte Materiallage 21' des intumeszenten Materials ein und stellt gleichzeitig eine stoffschlüssige Verbindung zwischen dieser Materiallage 21' und der Verbundwerkstofflage 20' sicher. Der Schichtverbund 2 wird hier somit mittels der Klebemittellage 22' im Wege einer sogenannten Nass-in-nass- oder Hart-in-nass-Verklebung (englisch auch als "Co-curing" oder "Co-bonding" bezeichnet) mit den unterschiedlichen Materiallagen 20' und 21' hergestellt. Durch den hierbei bereits anfänglich aufgebrachten Druck p - zum Beispiel in Höhe von etwa 7 bar - wird dabei eine frühzeitige Kompression des intumeszenten Materials erreicht, wodurch die Harzmenge für dessen Imprägnierung vergleichsweise gering gehalten werden kann.

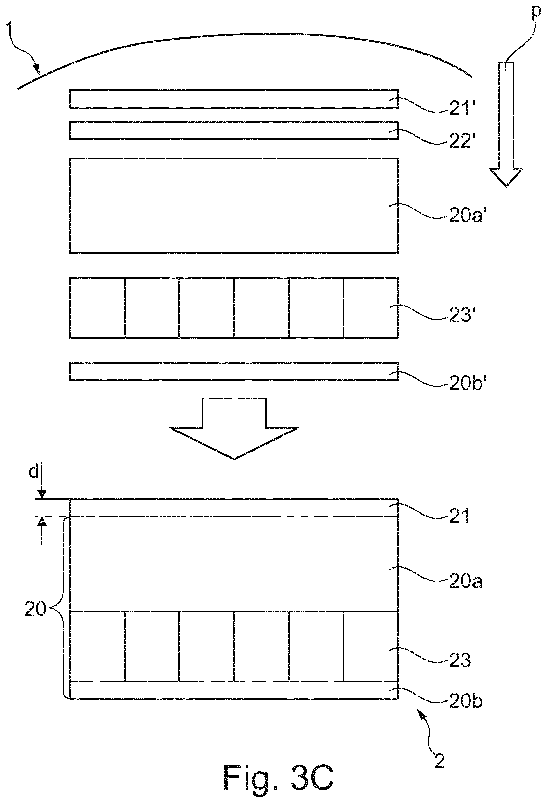

Bei der Variante der Figur 3C ist zusätzlich zu der Klebemittellage 22' eine Wabenlage 23' vorgesehen. Diese Wabenlage 23' dient der Bildung einer Wabenstrukturschicht 23 mit mehreren nebeneinander liegenden Waben in dem herzustellenden Schichtverbund 2. Über eine solche Wabenstrukturschicht 23 ist beispielsweise eine bessere Geräuschdämpfung erzielbar, wodurch sich ein entsprechend hergestellter Schichtverbund insbesondere für die Herstellung einer Innenfläche eines Triebwerksgehäuses N eignet. Die Wabenlage 23' ist hierbei zwischen zwei separaten Verbundwerkstofflagen 20a' und 20b' vorgesehen. Die Klebemittellage 22' ist dabei zwischen der einen separaten Verbundwerkstofflage 20a' und der Materiallage 21' aus intumeszenten Material vorgesehen.

In allen drei vorstehend erläuterten Varianten der Figuren 3A, 3B und 3C wird ein Schichtverbund 2 bereitgestellt, bei dem eine äußere Schicht 21 mit intumeszenten Material über das ausgehärtete Harz in einer verdichteten und abgedichteten Form vorliegt. Die vergleichsweise dünne Schicht 21 mit intumeszenten Material ist hierbei durch das ausgehärtete Harz zudem vergleichsweise steif, gleichwohl die ursprünglich verwendete Materiallage 21' flexibel ist und zum Beispiel als Faservliesstoffes zur Verfügung gestellt wird.

Im Übrigen ist beachtlich, dass bei einer Verwendung einer vorimprägnierten Verbundwerkstofflage 20' oder 20a', 20b' über eine frühzeitige Aufbringung des Druckes p erreicht werden kann, dass sich das zur Imprägnierung des komprimierten, intumeszenten Materials vorgesehene Harz nicht oder kaum mit einem für die Vorimprägnierung genutzten Harzes der jeweiligen Verbundwerkstofflage 20' oder 20a', 20b' vermischt.

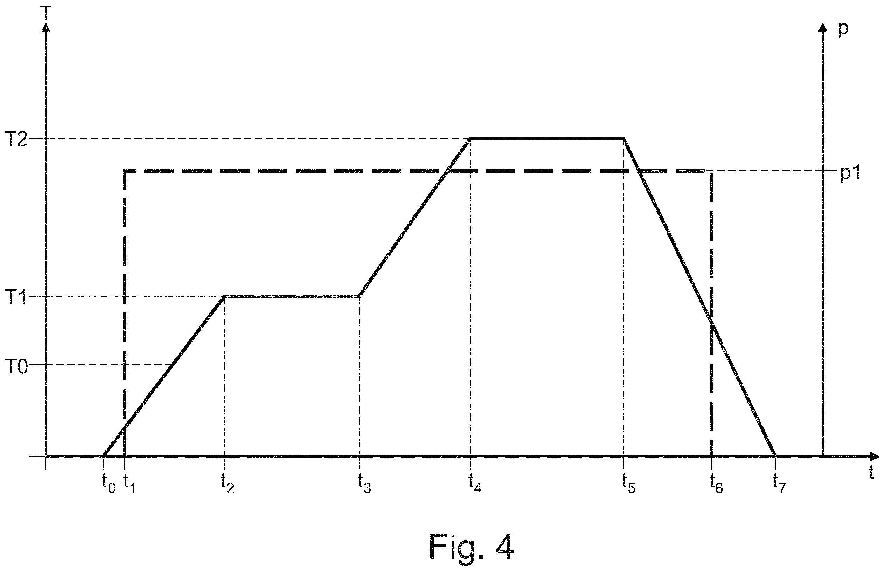

Mit dem Diagramm der Figur 4 sind beispielhaft Temperatur- und Druckverläufe für einen Herstellungsprozess veranschaulicht, mit dem aus aufeinandergeschichteten Materiallagen ein Schichtverbund 2 gewinnen wird. In dem Diagramm der Figur 4 ist dabei sowohl eine Temperatur T als auch ein Druck p über die Zeit t aufgetragen. Die Figur 4 veranschaulicht hierbei zum Beispiel einen Autoklavenprozess für die Herstellung eines Schichtverbundes 2.

Gleich zu Beginn des anhand der Figur 4 veranschaulichten Herstellungsprozesses, zu einem Zeitpunkt t₀, wird eine Heizeinrichtung gestartet und damit die Temperatur innerhalb des als Werkzeug 1 dienenden Autoklaven zunehmend erhöht. Mit Aktivierung der Heizeinrichtung wird zum Komprimieren der aufeinander geschichteten Materiallagen und insbesondere der Materiallage 21' aus intumeszenten, porigen Material ein über den Umgebungsdruck liegender (Kompression-) Druck p1 aufgebaut. Der Druck p1 liegt dabei bereits zu einem Zeitpunkt t₁ an, bevor die Temperatur über einen Mindestschwellwert T0 angestiegen ist, an dem das verflüssigte oder flüssiggehaltene Harz die Poren des komprimierten, intumeszenten Materials zu füllen beginnt.

Der Druck p1 auf die aufeinandergeschichteten Materiallagen wird über einen Großteil des Herstellungszyklus in einem Zeitraum t₁ bis t₆ aufrechterhalten, in dem die Temperatur zunächst bis zu einer ersten Maximaltemperatur T1 > T0, mit T1≈120°C erhöht wird. Das entsprechende Temperaturniveau wird hierbei für einen Zeitraum t₂ bis t₃ gehalten, bevor die Temperatur in einer nächsten Stufe (Zeitpunkt t₄>t₃) bis zu einer nochmals erhöhten Maximaltemperatur T2, mit T2≈175 °C erhöht und dieses erhöhte Temperaturniveau bis zu einem Zeitpunkt t₅ gehalten wird. Danach wird ein langsames Abkühlen bis zu einem Zeitpunkt t₇ gestattet, wobei in der Zwischenzeit auch der Druck p wieder auf Umgebungsdruck abgesenkt wird. Bei der Variante der Figur 4 wird somit der (Kompressions-) Druck p1 über den gesamten Zeitraum to bis t₅, in dem die Temperatur T stufenweise bis zur zweiten Maximaltemperatur T2 erhöht wird, aufgebracht und damit insbesondere bevor die Temperatur über die Mindesttemperatur von ≈70°C angestiegen ist. Eine definierte Verweilzeit (t₃ - t₂) bei der ersten Maximaltemperatur in Höhe von T1≈120°C, dient zum Spannungsausgleich beim Härten, da sichergestellt werden soll, das Werkzeug und Schichtverbund eine ausgeglichene Temperatur aufweisen, bevor die eigentliche Härtung durch die Erhöhung auf die zweite Maximaltemperatur T2≈175 °C erfolgt.

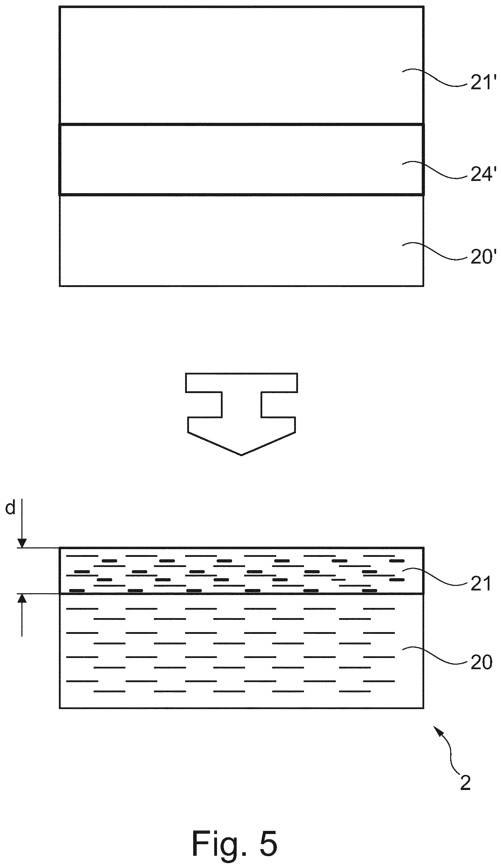

Mitte der Figur 5 ist nochmals schematisch eine Variante für die Herstellung eines Schichtverbunds 2 auf Basis der Temperatur- und Druckverläufe der Figur 4 veranschaulicht. Hierbei ist zwischen eine filzartige Materiallage 21' aus einem intumeszenten, porigen Material, wie z.B. Tecnofire®, und einer Verbundwerkstofflage 20' eine Harzlage 24' (analog zu der Klebemittellage 22') beispielsweise nach Art eines dünnen Films eingebracht. Infolge der frühzeitigen Kompression wird vor allem die Materiallage 21' aus intumeszenten Material verdichtet und das Harz der Harzlage 24' in diese eindringen, wenn nachfolgend die Temperatur stufenweise erhöht wird. Eine Vermischung des Harzes der Harzlage 24' mit einem Harz aus einem gegebenenfalls vorimprägnierten Prepreg der Verbundwerkstofflage 20' ist hierbei ausgeschlossen oder äußerst gering und nur am Rand der Materiallagen 20' und 21' gegeben. Der damit hergestellte Schichtverbund 2, aus dem nachfolgend ein Triebwerksbauteil hergestellt wird, weist somit an einer äußeren Mantelfläche nur eine dünne, eine Dicke d ≤ 2 mm aufweisende Schicht 21 mit intumeszenten Material und mit dieses abdichtendem und stabilisierendem Harz auf. Das ausgehärtete Harz ist hierbei in der Schicht 21 mit intumeszenten Material homogen verteilt und liegt in der Verbundwerkstoffschicht 20 nur an einem Rand vor, der an die Schicht 21 mit dem intumeszenten Material angrenzt.

Bei den vorstehend erläuterten Ausführungsvarianten ist die Materiallage 21' aus intumeszenten Material beispielsweise durch den angelegten Druck p1 auf etwa 1/3 oder 1/4 der ursprünglichen Dicke verdichtet, bevor das stabilisierende Harz eingebracht wird. Die vorherige Kompression der Materiallage 21 aus intumeszenten Material hat sich hierbei insbesondere als vorteilhaft erwiesen, wenn unterschiedliche Harze mit verschiedener Viskositäten in den unterschiedlichen Materiallagen 20', 20a', 20b', 22', 23' und 24' zum Einsatz kommen. Durch die frühzeitige Kompression wird hierbei insbesondere erreicht, dass sich die unterschiedlichen Harze kaum oder nicht vermischen und vor allem das für die Abdichtung und Stabilisierung des komprimierten intumeszenten Materials vorgesehene Harz innerhalb des hergestellten Schichtverbunds 2 maßgeblich nur in der Schicht 21 mit dem intumeszenten Material vorkommt.

### Bezugszeichenliste

- 1: Werkzeug / Autoklav
- 10: Harzzufuhr
- 11: Niederdruckverdichter
- 12: Hochdruckverdichter
- 13: Hochdruckturbine
- 14: Mitteldruckturbine
- 15: Niederdruckturbine
- 2, 2a, 2b: Schichtverbund
- 20: Verbundwerkstoffschicht / Verbundlaminat
- 20': Verbundwerkstofflage / Prepreg
- 20a, 20b: Separate Verbundwerkstoffschicht
- 20a', 20b': Separate Verbundwerkstofflage
- 21: Schicht mit intumeszenten Material
- 21': Materiallage aus intumeszenten Material
- 22': Klebemittellage
- 23: Wabenstrukturschicht
- 23': Wabenlage
- 24': Harzlage
- A: Auslass
- B: Bypasskanal
- BK: Brennkammerabschnitt
- C: Austrittskonus
- d: Dicke
- E: Einlass / Intake
- F: Fan
- FC: Fangehäuse
- HK: Hinterkante
- M: Mittelachse / Rotationsachse
- N: Triebwerksgehäuse
- p: (Kompressions-) Druck
- R: Eintrittsrichtung
- RS: Rotorwelle
- T: Turbofan-Triebwerk
- TT: Turbine
- U: Umfangsrichtung
- V: Verdichter
- VK1, VK2: Verkleidung

## Patentansprüche

1. Verfahren zur Herstellung eines Schichtverbunds, aus dem ein Triebwerksbauteil (FC, N, VK1, VK2) zumindest teilweise herstellbar ist, wobei der Schichtverbund (2, 2a, 2b) mehrlagig aufgebaut ist und mindestens eine Schicht (21) mit einem intumeszenten, porigen Material sowie mindestens eine weitere Schicht (20, 20a, 20b, 23) aufweist, wobei zur Herstellung des Schichtverbundes (2, 2a, 2b)
- mindestens eine Materiallage (21') aus dem intumeszenten, porigen Material zusammen mit mindestens einer Materiallage (20', 20a', 20b', 23') für die mindestens eine weitere Schicht (20, 20a, 20b, 23) in einem Werkzeug (1) aufeinandergeschichtet werden und
- nach dem Aufeinanderschichten der Materiallagen (20', 20a', 20b', 23', 21') zumindest das intumeszente, porige Material durch ein aushärtendes Harz imprägniert wird,
**dadurch gekennzeichnet, dass**
- vor der Imprägnierung auf die aufeinandergeschichteten Materiallagen (20', 20a', 20b', 23', 21') ein Druck (p1) aufgebracht wird, um wenigstens die Materiallage (21') des intumeszenten, porigen Materials zu komprimieren, und
- durch das aushärtende Harz die Materiallage (21') des intumeszenten, porigen Materials in dem Schichtverbund (2, 2a, 2b) in seiner komprimierten Form gehalten und gegen ein Eindringen einer Flüssigkeit abgedichtet wird.

2. Verfahren nach Anspruch 1, **dadurch gekennzeichnet, dass** für die Imprägnierung mit dem Harz eine Erwärmung der aufeinandergeschichteten Materiallagen (20', 20a', 20b', 23', 21') bis wenigstens zu einer Mindesttemperatur (T0) erfolgt.

3. Verfahren nach Anspruch 2, **dadurch gekennzeichnet, dass** der Druck (p1) zum Komprimieren wenigstens der Materiallage (21') des intumeszenten, porigen Materials aufgebracht wird, bevor die Mindesttemperatur (T1) erreicht ist.

4. Verfahren nach Anspruch 2 oder 3, **dadurch gekennzeichnet, dass** der Druck (p1) zum Komprimieren wenigstens der Materiallage (21') des intumeszenten, porigen Materials aufgebracht wird, wenn eine Heizeinrichtung zum Erwärmen (T1) der aufeinandergeschichteten Materiallagen (20', 20a', 20b', 23', 21') auf die Mindesttemperatur (T1) aktiviert wird oder bevor die Heizeinrichtung aktiviert wird.

5. Verfahren nach einem der vorhergehenden Ansprüche, **dadurch gekennzeichnet, dass** das zur Imprägnierung vorgesehene Harz als separate Materiallage (24') in den aufgeschichteten Materiallagen (20', 20a', 20b', 23', 21') vorgesehen ist.

6. Verfahren nach Anspruch 5, **dadurch gekennzeichnet, dass** eine separate Harzlage (24') zwischen der mindestens einen Materiallage (21') aus dem intumeszenten, porigen Material und der mindestens einen Materiallage (20', 20a', 20b', 23') vorgesehen wird.

7. Verfahren nach einem der vorhergehenden Ansprüche, **dadurch gekennzeichnet, dass** die mindestens eine Materiallage (20', 20a', 20b') für die mindestens eine weitere Schicht (20, 20a, 20b) vorimprägniert ist und das zur Imprägnierung des intumeszenten, porigen Materials vorgesehene Harz zumindest teilweise aus der vorimprägnierten Materiallage (20', 20a', 20b', 23', 21') stammt.

8. Verfahren nach einem der vorhergehenden Ansprüche, **dadurch gekennzeichnet, dass** in den aufeinandergeschichteten Materiallagen (20', 20a', 20b', 23', 21') mindestens eine Klebemittellage (22') vorgesehen wird.

9. Verfahren nach Anspruch 8, **dadurch gekennzeichnet, dass** die mindestens eine Klebemittellage (24') ein Harz enthält und zur Imprägnierung des intumeszenten, porigen Materials ein Harz vorgesehen ist, das zumindest teilweise aus der Klebemittellage (20', 20a', 20b', 23', 21') stammt.

10. Verfahren nach einem der vorhergehenden Ansprüche, **dadurch gekennzeichnet, dass** als Werkzeug (1) ein Autoklav genutzt ist, mittels dem der Druck (p1) zum Komprimieren wenigstens der Materiallage (21') des intumeszenten, porigen Materials auf die aufeinandergeschichteten Materiallagen (20', 20a', 20b', 23', 21') aufgebracht wird.

11. Verfahren nach einem der vorhergehenden Ansprüche, **dadurch gekennzeichnet, dass** die Schicht (21) mit einem intumeszenten, porigen Material in dem hergestellte Schichtverbund (2, 2a, 2b) eine Dicke (d) von 2,3 mm nicht übersteigt, insbesondere eine Dicke (d) im Bereich von 0,4 mm bis 1,5 mm aufweist.

12. Triebwerksbauteil für eine Gasturbinentriebwerk (T), das zumindest teilweise aus einem Schichtverbund (2, 2a, 2b) hergestellt ist, der mehrlagig aufgebaut ist und mindestens eine Schicht (21) mit einem intumeszenten, porigen Material sowie mindestens eine weitere Schicht (20, 20a, 20b, 23) aufweist, wobei zumindest das intumeszente, porige Material durch ein aushärtendes Harz imprägniert ist und durch das ausgehärtete Harz eine Materiallage (21') des intumeszenten, porigen Materials zur Bildung der Schicht (21) mit dem intumeszenten, porigen Material in dem Schichtverbund (2, 2a, 2b) in einer komprimierten Form gehalten und gegen ein Eindringen einer Flüssigkeit abgedichtet ist.

13. Triebwerksbauteil nach Anspruch 12, **dadurch gekennzeichnet, dass** das Triebwerksbauteil ein Triebwerksgehäuse (N), ein Fangehäuse (FC), eine Wandung eines Bypasskanals (B) oder ein Verkleidungsbauteil (VK1, VK2) für die Einhausung mindestens einer Leitung und/oder einer elektronischen und/oder Fluid führenden Komponente und/oder Baugruppe innerhalb des Triebwerks (T) ist.

## Claims

1. Method for manufacturing a layer bonding from which an engine component (FC, N, VK1, VK2) can be at least partially manufactured, wherein the layer bonding (2, 2a, 2b) has a multi-layer structure and at least one layer (21) with an intumescent poriferous material as well as at least one further layer (20, 20a, 20b, 23), wherein for manufacturing the layer bonding (2, 2a, 2b)
- at least one material layer (21') from intumescent poriferous material and at least one material layer (20', 20a', 20b', 23') for the at least one further layer (20, 20a, 20b, 23) are stacked on top of each other in a tool (1), and
- at least the intumescent poriferous material is impregnated by means of curing resin after the material layers (20', 20a', 20b', 23', 21') have been stacked,
**characterized in that**
- a pressure (p1) is applied to the material layers stacked on top of each other (20', 20a', 20b', 23', 21') prior to the impregnation so as to compress at least the material layer (21') of the intumescent poriferous material, and
- the material layer (21') of intumescent poriferous material is held in its compressed shape and sealed against the entry of any liquid in the layer bonding (2, 2a, 2b) by means of the curing resin.

2. Method according to claim 1, **characterized in that** heating of the material layers stacked on top of each other (20', 20a', 20b', 23', 21') up to at least a minimum temperature (T0) is carried out for performing the impregnation with the resin.

3. Method according to claim 2, **characterized in that** the pressure (p1) for compressing at least the material layer (21') of the intumescent poriferous material is applied before the minimum temperature (T1) is reached.

4. Method according to claim 2 or 3, **characterized in that** the pressure (p1) for compressing at least the material layer (21') of the intumescent poriferous material is applied when a heating appliance is activated for heating (T1) the material layers stacked on top of each other (20', 20a', 20b', 23', 21') to the minimum temperature (T1), or before the heating appliance is activated.

5. Method according to one of the preceding claims, **characterized in that** the resin provided for impregnation is provided as a separate material layer (24') in the material layers (20', 20a', 20b', 23', 21') stacked on top of each other.

6. Method according to claim 5, **characterized in that** a separate resin layer (24') is provided between the at least one material layer (21') from intumescent poriferous material and the at least one material layer (20', 20a', 20b', 23').

7. Method according to one of the preceding claims, **characterized in that** the at least one material layer (20', 20a', 20b') for the at least one further layer (20, 20a, 20b) is pre-impregnated, and the resin provided for impregnating the intumescent poriferous material comes at least partially from the pre-impregnated material layer (20', 20a', 20b', 23', 21').

8. Method according to one of the preceding claims, **characterized in that** at least one bonding agent layer (22') is provided in the material layers stacked on top of each other (20', 20a', 20b', 23', 21').

9. Method according to claim 8, **characterized in that** the at least one bonding agent layer (24') contains a resin, and a resin coming at least partially from the bonding agent layer (20', 20a', 20b', 23', 21') is provided for impregnating the intumescent poriferous material.

10. Method according to one of the preceding claims, **characterized in that** an autoclave is used as the tool (1) by means of which the pressure (p1) for compressing at least the material layer (21') of the intumescent poriferous material is applied to the material layers stacked on top of each other (20', 20a', 20b', 23', 21').

11. Method according to one of the preceding claims, **characterized in that** the layer (21) with the intumescent poriferous material does not exceed a thickness (d) of 2.3 mm, in particular has a thickness (d) in the range of 0.4 mm to 1.5 mm, in the manufactured layer bonding (2, 2a, 2b).

12. Engine component for a gas turbine engine (T) that is made at least partially of a layer bonding (2, 2a, 2b) which has a multi-layer structure and comprises at least one layer (21) with an intumescent poriferous material as well as at least one further layer (20, 20a, 20b, 23), wherein at least the intumescent poriferous material is impregnated with a cured resin, and a material layer (21') of the intumescent poriferous material is kept in a compressed shape and sealed against the entry of any liquid by the curing resin to form the layer (21) with the intumescent poriferous material in the layer bonding (2, 2a, 2b).

13. Engine component according to claim 12, **characterized in that** the engine component is an engine housing (N), a fan housing (FC), a wall of a bypass channel (B), or a cladding component (VK1, VK2) for housing at least one conduit and/or an electronic component and/or a component conducting a fluid and/or assembly group inside the engine (T).

## Revendications

1. Procédé de fabrication d'un composite stratifié à partir duquel un élément de moteur (FC, N, VK1, VK2) peut être fabriqué au moins partiellement, dans lequel le composite stratifié (2, 2a, 2b) est conçu en plusieurs couches et présente au moins une couche (21) avec un matériau poreux gonflant ainsi qu'au moins une autre couche (20, 20a, 20b, 23), dans lequel pour fabriquer le composite stratifié (2, 2a, 2b)
- dans un outil (1), au moins une couche de matériau (21') du matériau poreux gonflant est revêtue l'une sur l'autre conjointement avec au moins une couche de matériau (20', 20a', 20b', 23') pour l'au moins une autre couche (20, 20a, 20b, 23) et
- après avoir revêtu l'une sur l'autre les couches de matériau (20', 20a', 20b', 23', 21'), au moins le matériau poreux gonflant est imprégné par une résine durcissant par vieillissement,
**caractérisé en ce que**
- avant l'imprégnation, une pression (p1) est appliquée sur les couches de matériau (20', 20a', 20b', 23', 21') revêtues l'une sur l'autre, pour comprimer au moins la couche de matériau (21') du matériau poreux gonflant, et
- par la résine durcissant par vieillissement, la couche de matériau (21') du matériau poreux gonflant est maintenue dans sa forme comprimée dans le composite stratifié (2, 2a, 2b) et étanchéifiée contre la pénétration d'un liquide.

2. Procédé selon la revendication 1, **caractérisé en ce que** pour l'imprégnation avec la résine, un réchauffement des couches de matériau (20', 20a', 20b', 23', 21') revêtues l'une sur l'autre jusqu'au moins une température minimale (T0) est effectué.

3. Procédé selon la revendication 2, **caractérisé en ce que** la pression (p1) pour comprimer au moins la couche de matériau (21') du matériau poreux gonflant est appliquée avant que la température minimale (T1) ne soit atteinte.

4. Procédé selon la revendication 2 ou 3, **caractérisé en ce que** la pression (p1) pour comprimer au moins la couche de matériau (21') du matériau poreux gonflant est appliquée lorsqu'un dispositif de chauffage pour réchauffer (T1) les couches de matériau (20', 20a', 20b', 23', 21') revêtues les unes sur les autres est activé ou avant que le dispositif de chauffage ne soit activé.

5. Procédé selon l'une des revendications précédentes, **caractérisé en ce que** la résine prévue pour l'imprégnation est prévue en tant que couche de matériau séparée (24') dans les couches de matériau (20', 20a', 20b', 23', 21') revêtues.

6. Procédé selon la revendication 5, **caractérisé en ce qu'**une couche de résine séparée (24') est prévue entre l'au moins une couche de matériau (21') à partir du matériau poreux gonflant et l'au moins une couche de matériau (20', 20a', 20b', 23').

7. Procédé selon l'une des revendications précédentes, **caractérisé en ce que** l'au moins une couche de matériau (20', 20a', 20b') pour l'au moins une autre couche (20, 20a, 20b) est pré-imprégnée et la résine prévue pour l'imprégnation du matériau poreux gonflant provient au moins partiellement de la couche de matériau (20', 20a', 20b', 23', 21') pré-imprégnée.

8. Procédé selon l'une des revendications précédentes, **caractérisé en ce qu'**au moins une couche de colle (22') est prévue dans les couches de matériau (20', 20a', 20b', 23', 21') revêtues les unes sur les autres.

9. Procédé selon la revendication 8, **caractérisé en ce que** l'au moins une couche de colle (24') contient une résine et que pour l'imprégnation du matériau poreux gonflant, une résine est prévue qui provient au moins partiellement de la couche de colle (20', 20a', 20b', 23', 21').

10. Procédé selon l'une des revendications précédentes, **caractérisé en ce qu'**un autoclave est employé en tant qu'outil (1), au moyen duquel la pression (p1) pour comprimer au moins la couche de matériau (21') du matériau poreux gonflant est appliquée sur les couches de matériau (20', 20a', 20b', 23', 21') revêtues les unes sur les autres.

11. Procédé selon l'une des revendications précédentes, **caractérisé en ce que** la couche (21) avec un matériau poreux gonflant dans le composite stratifié (2, 2a, 2b) fabriqué ne dépasse pas une épaisseur (d) de 2,3 mm, présente en particulier une épaisseur (d) dans la plage de 0,4 mm à 1,5 mm.

12. Élément de moteur pour un moteur de turbine à gaz (T) qui est fabriqué au moins partiellement à partir d'un composite stratifié (2, 2a, 2b), qui est conçu en plusieurs couches et présente au moins une couche (21) avec un matériau poreux gonflant ainsi qu'au moins une autre couche (20, 20a, 20b, 23), dans lequel au moins le matériau poreux gonflant est imprégné par une résine durcissant par vieillissement, et par la résine durcissant par vieillissement, une couche de matériau (21') du matériau poreux gonflant pour former la couche (21) avec le matériau poreux gonflant est maintenue dans une forme comprimée dans le composite stratifié (2, 2a, 2b) et étanchéifiée contre la pénétration d'un liquide.

13. Élément de moteur selon la revendication 12, **caractérisé en ce que** l'élément de moteur est un carter de moteur (N), un carter de ventilateur (FC), une paroi d'un canal de dérivation (B) ou un élément d'habillage (VK1, VK2) pour loger au moins un conduit et/ou un composant électronique et/ou conduisant le fluide et/ou un module à l'intérieur du moteur (T).
